# FASCICULE DE BREVET EUROPEEN

(11) **EP 3 580 443 B1**
(45) Date de publication et mention de la délivrance du brevet: **15.05.2024**
(21) Numéro de dépôt: 18706791.3
(22) Date de dépôt: 05.02.2018
(51) Int. Cl.: F02K 3/077, F01D 9/06, F02C 6/08, F02C 7/18

(54) **TURBORÉACTEUR A DOUBLE FLUX COMPRENANT UNE VEINE INTERMÉDIAIRE DÉDIÉE A L'ALIMENTATION EN AIR PAR DES BRAS RADIAUX D'UN CARTER D'ÉCHAPPEMENT DE CE TURBORÉACTEUR**
TURBOGEBLÄSE MIT ZWISCHENSTRÖMUNG ZUR LUFTZUFUHR ÜBER RADIALARME ZU EINEM ABGASGEHÄUSE DIESES TURBOGEBLÄSES
TURBOFAN COMPRISING AN INTERMEDIATE STREAM FOR THE SUPPLY OF AIR VIA RADIAL ARMS TO AN EXHAUST HOUSING OF SAID TURBOFAN

(30) Priorité: 07.02.2017 FR 1700128
(43) Date de publication de la demande: 18.12.2019
(73) Titulaire: Safran Aircraft Engines, 75015 Paris (FR)
(72) Inventeur: BEAUJARD, Antoine, Jean-Philippe, 77550 Moissy-Cramayel (FR); BOUDEBIZA, Tewfik, 77550 Moissy-Cramayel (FR); PIKOVSKY, Catherine, 77550 Moissy-Cramayel (FR); VERDIER, Bastien, Pierre, 77550 Moissy-Cramayel (FR)
(74) Mandataire: Brevalex
(86) Numéro de dépôt international: PCT/FR2018/050275
(87) Numéro de publication internationale: WO 2018/146405

(56) Documents cités:
- WO-A1-2013/165281
- FR-A1- 2 824 598
- FR-A1- 2 897 655
- GB-A- 695 482

## Description

### DOMAINE TECHNIQUE

L'invention se rapporte à l'alimentation en air de bras radiaux d'un carter d'échappement équipant un turboréacteur à double flux.

### ÉTAT DE LA TECHNIQUE ANTÉRIEURE

Un turboréacteur à double flux comporte une manche d'entrée recevant l'air qui est aspiré par un compresseur basse pression pour ensuite être divisé en un flux primaire central et un flux secondaire entourant le flux primaire.

Le flux secondaire circule dans un espace appelé veine secondaire qui est délimité extérieurement par un carter de veine secondaire encore appelé carène du moteur, et intérieurement par une enveloppe entourant le flux primaire.

Le flux primaire circule dans un espace appelé veine primaire délimité extérieurement par l'enveloppe et intérieurement par une succession d'éléments internes fixes et rotatifs. Les éléments internes fixes comprennent des plateformes de redresseurs et de distributeurs, et des viroles de carters intérieurs, et les éléments internes rotatifs comprennent des plateformes de roues aubagées de rotors.

Complémentairement, des purges soufflent de l'air depuis les régions internes vers la veine primaire, à travers chaque espace séparant longitudinalement un élément interne fixe et un élément interne rotatif. Ces purges assurent que de l'air chaud de la veine primaire n'entre pas dans les régions intérieure plus froides.

Plus concrètement, le flux primaire circule entre un carter interne et un carter externe de compresseur haute pression pour être comprimé dans ce compresseur haute pression avant d'être brulé dans une chambre de combustion. Il est ensuite détendu dans une turbine haute pression pour entraîner le compresseur haute pression, puis dans une turbine basse pression pour entraîner le compresseur basse pression, avant d'être expulsé vers l'arrière en générant une poussée.

L'enveloppe délimitant extérieurement la veine primaire est ainsi formée par une série de carters comprenant un carter de compresseur haute pression, un carter au niveau de la chambre de combustion et un carter de turbine haute pression, ainsi que par une virole externe de carter d'échappement.

Chaque turbine et chaque compresseur est formé d'étages comportant chacun une série d'aubes rotatives régulièrement espacées autour d'un axe central longitudinal du moteur, précédé éventuellement d'un distributeur dans le cas d'une turbine ou suivie éventuellement d'un redresseur dans le cas d'un compresseur. Les distributeurs et les redresseurs sont constitués d'une série d'aubes fixes.

La partie arrière d'un tel moteur comprend, en aval de la turbine basse pression, un carter d'échappement, usuellement désigné par l'acronyme TRF (Turbine Rear Frame), qui porte un palier supportant une extrémité arrière de rotor du moteur.

Ce carter d'échappement comporte une virole interne et une virole externe et des bras radiaux solidarisant ces viroles l'une à l'autre, en traversant radialement la veine primaire.

Le palier que le carter d'échappement supporte est alimenté par de l'air provenant de la veine secondaire en étant acheminé par les bras du carter d'échappement. Cet air est utilisé notamment pour refroidir les bras radiaux et pour pressuriser extérieurement une enceinte de lubrification dans laquelle est logé le palier porté par ce carter d'échappement.

Cependant, les carters entourant la veine primaire portent à leurs faces externes des éléments tels que des rampes de carburant, des systèmes de commande d'aubes à calage variable ou autres. Ces éléments dépassent, de sorte qu'ils introduisent des pertes de charge significatives pour la portion de flux secondaire qui les longe et dans laquelle est collecté l'air d'alimentation traversant les bras radiaux du carter d'échappement.

Du fait de ces pertes de charges, la pression au niveau des ouvertures de collecte peut s'avérer au insuffisante pour engendrer dans les bras radiaux du carter d'échappement un débit suffisant.

Les documents FR2824598 A1, FR2897655 A1, GB695482 A et WO 2013/165281 A1 décrivent des turboréacteurs de l'art antérieur.

Une solution pourrait consister à collecter l'air au moyen d'une écope dépassant radialement des carters entourant la veine primaire, au niveau des bras radiaux, mais une telle écope introduirait des turbulences pénalisantes pour l'écoulement du flux secondaire.

Le but de l'invention est d'apporter une architecture permettant d'améliorer l'alimentation en air à travers les bras radiaux du carter d'échappement.

### EXPOSÉ DE L'INVENTION

A cet effet, l'invention a pour objet un turboréacteur à double flux comprenant :
- un compresseur basse pression ;
- une série de carters s'étendant en aval de ce compresseur basse pression pour délimiter une veine primaire de circulation d'un flux primaire, et comprenant un bord amont délimitant une ouverture d'entrée circonférentielle de ce flux primaire ;
- un compresseur haute pression situé dans la veine primaire ;
- un carénage entourant la série de carters pour délimiter avec cette série de carters une veine intermédiaire de circulation d'un flux intermédiaire, ce carénage ayant un bord amont entourant la série de carters pour délimiter avec cette série de carters une ouverture d'entrée située en amont du compresseur haute pression ;
- un carter de veine secondaire entourant le carénage intermédiaire pour délimiter avec ce carénage une veine secondaire de circulation d'un flux secondaire ;
- un carter d'échappement comprenant une virole externe s'étendant dans le prolongement de la série de carters ainsi que des bras radiaux partant de cette virole externe, l'un au moins de ces bras radiaux collectant de l'air provenant de la veine intermédiaire pour alimenter en air pressurisé une région centrale de ce carter d'échappement.

Avec cet agencement, la pression régnant en entrée des bras radiaux d'alimentation du carter correspond à la pression statique augmentée de la pression dynamique en sortie de compresseur basse pression, sans que l'écoulement du flux secondaire ne soit perturbé.

L'invention a également pour objet un turboréacteur ainsi défini, dans lequel l'air aspiré est divisé au niveau d'un carter intermédiaire situé entre le compresseur basse pression et le compresseur haute pression, pour former le flux primaire central, le flux intermédiaire, et le flux secondaire.

L'invention a également pour objet un turboréacteur ainsi défini, dans lequel l'air fourni en région centrale du carter d'échappement contribue à pressuriser des joints d'une enceinte de lubrification dans laquelle est logé un palier porté par ce carter d'échappement.

L'invention a également pour objet un turboréacteur ainsi défini, dans lequel l'air fourni en région centrale du carter d'échappement alimente une purge située en amont du carter d'échappement.

L'invention a également pour objet un turboréacteur ainsi défini, dans lequel les bras radiaux du carter d'échappement comportent des chemises percées agencées pour que l'air traversant ces bras radiaux refroidisse les parois de ces bras.

L'invention a également pour objet un turboréacteur ainsi défini, dans lequel l'ouverture d'entrée de la veine intermédiaire est une ouverture circonférentielle entourant la veine primaire.

L'invention a également pour objet un turboréacteur ainsi défini, dans lequel le carénage rejoint la virole externe du carter d'échappement en aval des bras radiaux de ce carter d'échappement.

### BRÈVE DESCRIPTION DES DESSINS

La figure 1 est une demi-vue schématique selon un plan de coupe longitudinal du moteur selon l'invention dans son ensemble ;
La figure 2 est une demi-vue selon un plan de coupe longitudinal d'une partie du moteur selon l'invention s'étendant depuis sa chambre de combustion jusqu'à son carter d'échappement ;
La figure 3 est une demi-vue en coupe schématique illustrant le cheminement de l'air collecté au niveau du carter d'échappement dans le moteur selon l'invention.

### EXPOSÉ DÉTAILLÉ DE MODES DE RÉALISATION PARTICULIERS

L'idée à la base de l'invention est de collecter l'air destiné à transiter par les bras radiaux du carter d'échappement, directement en aval du compresseur basse pression afin de bénéficier de la pression statique augmentée de la pression dynamique en aval du compresseur basse pression.

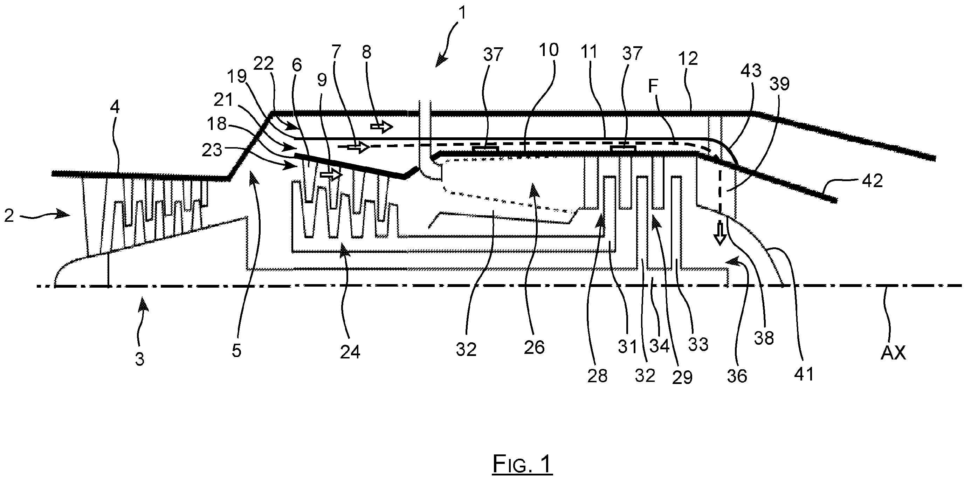

Sur la figure 1, un turboréacteur à double flux 1 comporte une manche d'entrée 2 dans laquelle l'air est aspiré par les pales d'un compresseur basse pression 3 entourés par un carter 4 du compresseur basse pression, pour être ensuite divisé en trois flux au niveau d'un carter intermédiaire 5 s'étendant longitudinalement entre le compresseur basse pression et un compresseur haute pression. Ces trois flux comportent un flux primaire central 6, un flux intermédiaire 7 entourant le flux primaire, et un flux secondaire 8 qui entoure le flux intermédiaire 7.

Le flux primaire 6 circule dans une veine primaire qui est délimitée intérieurement par une succession d'éléments fixes internes et d'éléments rotatifs internes. Les éléments internes fixes comprennent des plateformes de redresseurs et de distributeurs, et des viroles de carters intérieurs, et les éléments internes rotatifs comprennent des plateformes de roues aubagées de rotors.

Cette veine primaire est délimitée extérieurement par une série de carters qui l'entourent et qui comprennent un carter de compresseur haute pression 9, un carter entourant la chambre de combustion et un carter entourant la turbine haute pression repérés conjointement par 10, ainsi que par une virole externe du carter d'échappement.

Le flux intermédiaire circule entre d'une part la série de carters délimitant la veine primaire, et d'autre part un carénage intermédiaire 11 qui les entoure sur toutes leurs longueurs.

Le flux secondaire circule dans une veine secondaire délimitée intérieurement par le carénage intermédiaire 11 et extérieurement par un carter de veine secondaire 12 entourant le carénage intermédiaire 11.

Le carter intermédiaire 5 comporte une virole externe et une virole interne reliées par des bras radiaux, et il est situé entre le compresseur basse pression 3 et le compresseur haute pression 24. Sa virole externe raccorde le carter 4 du compresseur basse pression au carter de veine secondaire 12, et sa virole interne et supporte les paliers de ces compresseurs.

Un bord circulaire amont 18 du carter externe de compresseur haute pression, et un bord circulaire amont 19 du carénage intermédiaire 11 sont situés au niveau de ce carter intermédiaire 5. Le bord circulaire amont 18 du carter de compresseur haute pression délimite intérieurement une ouverture d'entrée circonférentielle 23 de la veine primaire.

Le bord circulaire amont 19 du carénage 11 délimite avec le bord 18 une ouverture d'entrée circonférentielle 21 de la veine intermédiaire, et il délimite avec le carter de veine secondaire 12 une ouverture d'entrée circonférentielle 22 de la veine secondaire. Ces ouvertures d'entrée ont l'une et l'autre des formes de couronnes et elles reçoivent l'une et l'autre de l'air ayant subi une compression basse pression et circulant dans le carter intermédiaire 5.

Les bords 18 et 19 peuvent le cas échéant être formés directement dans le carter intermédiaire sous forme de becs correspondants prolongés respectivement par le carter de compresseur haute pression et par le carénage intermédiaire 11.

Passé le carter intermédiaire 5, le flux primaire 6 traverse un compresseur haute pression 24 avant d'atteindre une chambre de combustion 26 pour être ensuite détendu dans une turbine haute pression 28 puis dans une turbine basse pression 29.

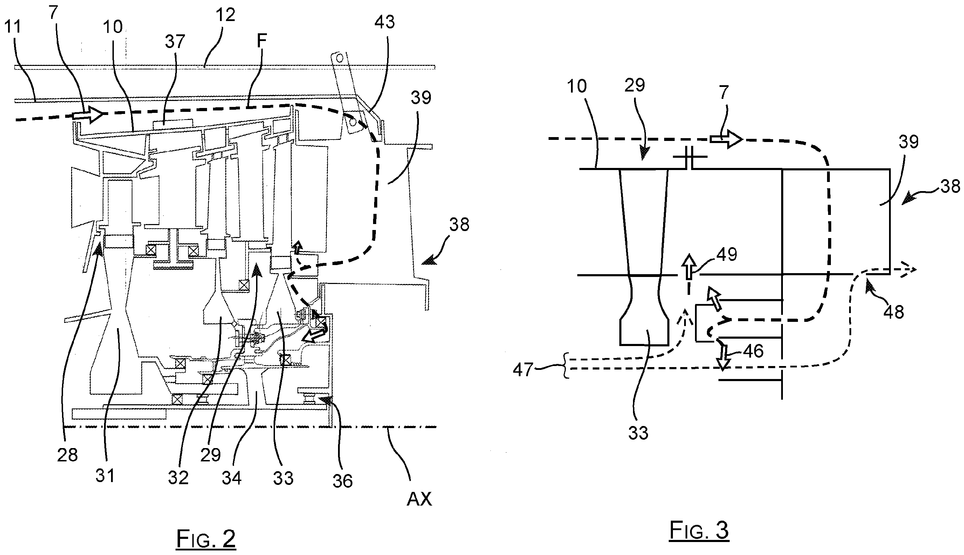

Comme visible plus clairement sur la figure 2, la turbine haute pression 28 comporte un disque 31 portant des aubes correspondantes, ce disque étant solidarisé à un corps haute pression 25 s'étendant en amont jusqu'au compresseur 24 dont ce corps haute pression 25 porte également les aubes.

La turbine basse pression 29 comporte deux disques 32, 33 portant des aubes correspondantes, et qui sont solidarisés à un tourillon basse pression 34 ayant une extrémité aval reçue dans un palier 36. Ce palier 36 est situé en région centrale d'un carter d'échappement 38 qui l'entoure tout en assurant son maintien.

Ce carter d'échappement 38 comporte une virole interne et une virole externe qui délimite extérieurement la veine primaire, ainsi que des bras radiaux 39 solidarisant ces viroles l'une à l'autre. La virole externe s'étend dans la continuité de la série de carters 9, 10 et les bras radiaux traversent radialement la veine primaire, l'ensemble étant situé en aval de la turbine basse pression 29.

Ce carter d'échappement 38 porte par ailleurs un cône de sortie 41 qui est entouré par une paroi de confluence 42, en aval de la turbine basse pression 29 et des bras radiaux 39. Cette paroi de confluence qui est fixée à une bride du carter d'échappement s'étend dans le prolongement de la virole externe du carter d'échappement pour guider le flux secondaire pour qu'il présente un écoulement le plus régulier possible, c'est-à-dire sans perturbations.

Un ou plusieurs des bras radiaux 39 est creux, de façon à acheminer dans une région centrale de ce carter d'échappement 38 de l'air provenant de la veine intermédiaire pour notamment pressuriser les joints de l'enceinte de lubrification du palier porté par ce carter, selon un chemin F représenté en trait pointillé sur les figures 1 et 2.

Le carénage intermédiaire 11 entoure la série de carters délimitant extérieurement la veine primaire depuis le carter intermédiaire correspondant à la sortie de la portion de compression basse pression, jusqu'à l'arrière du moteur en aval des bras radiaux 39. Comme visible notamment sur la figure 1, la série de carters 9 et 10 porte à sa face externe différents équipements, tels que des brides, des rampes de carburant, des systèmes de commande d'aubes à calage variable ou autres, repérés par 37. Le carénage intermédiaire 11 commence au premier équipement du compresseur haute pression.

Autrement dit, les différents équipements 37 sont tous situés dans la veine intermédiaire au lieu d'être situés dans la veine secondaire, de sorte qu'ils n'introduisent pas de perte de charge dans la veine secondaire. Sur toute sa longueur, ce carénage 11 entoure la série de carters 9, 10 pour délimiter avec celle-ci un espace annulaire de circulation du flux d'air de la veine intermédiaire.

Ce carénage 11 présente une extrémité aval 43 située après les bras radiaux 39 qui se resserre pour rejoindre la virole externe du carter d'échappement de sorte que la veine intermédiaire est fermée à son extrémité arrière.

Cette extrémité aval 43 a une forme de conduit annulaire se séparant en plusieurs conduits axiaux coniques. Chaque conduit conique se termine par un coude orienté vers un bras radial 39 du carter d'échappement 38 pour former une écope.

La totalité du flux intermédiaire 7 est ainsi évacuée par le ou les canaux internes des différents bras radiaux 39 pour notamment refroidir ces bras. Cet air est plus particulièrement destiné à pressuriser les joints de l'enceinte de lubrification du palier porté par ce carter, et à alimenter une purge de turbine basse pression.

D'une manière générale, la pression qui règne dans l'ensemble de la veine intermédiaire correspond à la pression totale à son entrée 21, c'est-à-dire à la pression statique de l'air qui a été compressé par le compresseur basse pression 3 augmentée de la pression dynamique. En effet, le débit du flux intermédiaire tant relativement faible, les pertes de charges introduites par les éléments 37 sont diminuées.

Dans ces conditions, la pression régnant au niveau de l'entrée des bras radiaux 39 vaut la pression totale régnant à l'entrée 21, c'est-à-dire la pression statique résultant de la compression délivrée par le compresseur basse pression augmentée de la pression dynamique.

L'invention permet ainsi, malgré la présence des éléments 37 dépassant de la face externe de la série de carters 9, 10, de maintenir une pression suffisamment élevée du flux longeant la face externe de cette série de carters. Elle permet de plus de limiter les turbulences du flux secondaire qui ne longe plus les irrégularités que constituent les éléments 37.

Comme représenté schématiquement sur la figure 3, le flux intermédiaire 7 qui transite par les bras radiaux du carter d'échappement, refroidit ces bras, pressurise l'enceinte de lubrification renfermant le palier que porte ce carter d'échappement, et il alimente également une purge située entre le dernier étage rotatif de la turbine basse pression et le carter d'échappement.

Pour améliorer le refroidissement des bras radiaux 39, ceux-ci sont équipés de chemises internes percées agencées pour améliorer la convection thermique le long des parois de ces bras.

Comme le montre la figure 3, le flux 7 traverse les bras 39 du carter pour les refroidir, et une première partie de l'air restant est dirigée vers l'environnement de l'enceinte de lubrification portée par le carter d'échappement, pour contribuer à sa pressurisation, ce qui est représenté par la flèche 46.

L'air issu du flux 7, complété d'un autre air de pressurisation 47, provenant de l'amont de la turbine basse pression, est par ailleurs réintroduit dans la veine primaire en traversant un passage 48 formé dans la virole interne du carter d'échappement 38.

Une seconde partie de l'air restant est dirigé vers la purge 49 située entre le dernier étage de turbine basse pression et le carter d'échappement 38. La purge 49 est complétée par de l'air 47 provenant de l'amont de la turbine.

Par ailleurs, le flux intermédiaire peut aussi être exploité pour refroidir un carter de turbine haute pression afin de réduire le jeu existant entre les extrémités de pales de la turbine haute pression et ce carter.

## Revendications

1. Turboréacteur à double flux (1) comprenant :
- un compresseur basse pression (3) ;
- une série de carters (9, 10) s'étendant en aval de ce compresseur basse pression (3) pour délimiter une veine primaire de circulation d'un flux primaire (6), et comprenant un bord amont (18) délimitant une ouverture d'entrée circonférentielle (23) de ce flux primaire (6) ;
- un compresseur haute pression (24) situé dans la veine primaire ;
- un carénage (11) entourant la série de carters (9, 10) pour délimiter avec cette série de carters (9, 10) une veine intermédiaire de circulation d'un flux intermédiaire (7), ce carénage ayant un bord amont (19) entourant la série de carters (9, 10) pour délimiter avec cette série de carters (9, 10) une ouverture d'entrée (21) située en amont du compresseur haute pression (24) ;
- un carter de veine secondaire (12) entourant le carénage intermédiaire (11) pour délimiter avec ce carénage (11) une veine secondaire de circulation d'un flux secondaire (8) ;
- un carter d'échappement (38) comprenant une virole externe s'étendant dans le prolongement de la série de carters (9, 10) ainsi que des bras radiaux partant de cette virole externe, l'un au moins de ces bras radiaux (39) collectant de l'air provenant de la veine intermédiaire pour alimenter en air pressurisé une région centrale de ce carter d'échappement (38), dans lequel un air aspiré par le compresseur basse pression (3) est divisé au niveau d'un carter intermédiaire (5) situé entre le compresseur basse pression (3) et le compresseur haute pression (24), pour former le flux primaire central (6), le flux intermédiaire (7), et le flux secondaire (8).

2. Turboréacteur selon la revendication 1, dans lequel l'air fourni en région centrale du carter d'échappement (38) contribue à pressuriser des joints d'une enceinte de lubrification dans laquelle est logé un palier porté par ce carter d'échappement (38).

3. Turboréacteur selon l'une des revendications 1 ou 2, dans lequel l'air fourni en région centrale du carter d'échappement (38) alimente une purge (49) située en amont du carter d'échappement (38).

4. Turboréacteur selon l'une des revendications 1 à 3, dans lequel les bras radiaux (39) du carter d'échappement (38) comportent des chemises percées agencées pour que l'air traversant ces bras radiaux (39) refroidisse les parois de ces bras.

5. Turboréacteur selon l'une des revendications 1 à 4, dans lequel l'ouverture d'entrée (21) de la veine intermédiaire est une ouverture circonférentielle entourant la veine primaire.

6. Turboréacteur selon l'une des revendications 1 à 5, dans lequel le carénage (11) rejoint la virole externe du carter d'échappement en aval des bras radiaux (39) de ce carter d'échappement (38).

## Patentansprüche

1. Zweistrahliges Turbostrahltriebwerk (1), das Folgendes umfasst:
- einen Niederdruckkompressor (3);
- eine Reihe von Gehäusen (9, 10), die sich stromabwärts vom Niederdruckkompressor (3) erstrecken, um einen Primärströmungskanal zum Zirkulieren eines Primärstroms (6) zu begrenzen, und eine stromaufwärts gelegene Kante (18) umfassen, die eine umlaufende Einlassöffnung (23) des Primärstroms (6) begrenzt;
- einen Hochdruckkompressor (24), der sich im Primärströmungskanal befindet;
- eine Verkleidung (11), die die Reihe von Gehäusen (9, 10) umgibt, um mit der Reihe von Gehäusen (9, 10) einen Zwischenströmungskanal zum Zirkulieren eines Zwischenstroms (7) zu begrenzen, wobei die Verkleidung eine stromaufwärts gelegene Kante (19) aufweist, die die Reihe von Gehäusen (9, 10) umgibt, um mit der Reihe von Gehäusen (9, 10) eine Einlassöffnung (21) zu begrenzen, die sich stromaufwärts des Hochdruckkompressors (24) befindet;
- ein Sekundärströmungskanalgehäuse (12), das die Zwischenverkleidung (11) umgibt, um mit der Verkleidung (11) einen Sekundärströmungskanal zum Zirkulieren eines Sekundärstroms (8) zu begrenzen;
- ein Abgasgehäuse (38), das einen Außenmantel umfasst, der sich in die Erstreckung der Reihe von Gehäusen (9, 10) erstreckt, sowie radiale Arme, die von dem Außenmantel ausgehen, wobei mindestens einer der radialen Arme (39) die vom Zwischenströmungskanal kommende Luft sammelt, um einen zentralen Bereich des Abgasgehäuses (38) mit Druckluft zu versorgen, in dem die durch den Niederdruckkompressor (3) angesaugte Luft auf Höhe eines Zwischengehäuses (5), das sich zwischen dem Niederdruckkompressor (3) und dem Hochdruckkompressor (24) befindet, aufgeteilt wird, um den zentralen Primärstrom (6), den Zwischenstrom (7) und den Sekundärstrom (8) zu bilden.

2. Turbostrahltriebwerk nach Anspruch 1, bei dem die im zentralen Bereich des Abgasgehäuses (38) bereitgestellte Luft dazu beiträgt, die Dichtungen einer Schmierkammer mit Druck beaufschlagt werden, in der eine vom Abgasgehäuse (38) getragene Lageranordnung untergebracht ist.

3. Turbostrahltriebwerk nach einem der Ansprüche 1 oder 2, bei dem die im zentralen Bereich des Abgasgehäuses (38) bereitgestellte Luft eine Lüftungsöffnung (49) versorgt, die sich stromaufwärts des Abgasgehäuses (38) befindet.

4. Turbostrahltriebwerk nach einem der Ansprüche 1 bis 3, bei dem die radialen Arme (39) des Abgasgehäuses (38) durchbrochene Umhüllungen umfassen, die so angeordnet sind, dass die die radialen Arme (39) durchquerende Luft die Wände der Arme kühlt.

5. Turbostrahltriebwerk nach einem der Ansprüche 1 bis 4, bei dem die Einlassöffnung (21) des Zwischenströmungskanals eine umlaufende Öffnung ist, die den Primärströmungskanal umgibt.

6. Turbostrahltriebwerk nach einem der Ansprüche 1 bis 5, bei dem sich die Verkleidung (11) stromabwärts der radialen Arme (39) des Abgasgehäuses (38) mit dem Außenmantel des Abgasgehäuses verbindet.

## Claims

1. A double flow turbojet (1) including:
- a low pressure compressor (3);
- a series of casings (9,10) extending downstream of this low pressure compressor (3) to delimit a primary flow path for circulating a primary stream (6), and including an upstream edge (18) located downstream of the low pressure compressor and delimiting a circumferential inlet opening (23) for this primary stream (6);
- a high pressure compressor (24) situated in the primary flow path;
- a shroud (11) surrounding the series of casings (9, 10) to delimit with this series of casings (9, 10) an intermediate flow path for circulating an intermediate stream (7), this shroud (11) having an upstream edge (19) surrounding the series of casings (9, 10) to delimit with this series of casings (9, 10) an inlet opening (21) situated upstream of the high pressure compressor (24);
- a secondary flow path casing (12) surrounding the shroud (11) to delimit with this shroud (11) a secondary flow path for circulating a secondary stream (8);
- an exhaust casing (38) including an outer shell extending into an extension of the series of casings (9, 10) as well as radial arms coming from this outer shell, one at least of these radial arms (39) collecting air coming from the intermediate flow path to supply with pressured air a central region of this exhaust casing (38),
wherein air sucked by low pressure compressor (3) is divided at a level of an intermediate casing (5) situated between the low pressure compressor (3) and the high pressure compressor (24), to form the primary stream (6), the intermediate stream (7), and the secondary stream (8).

2. The turbojet according to claim 1, in which the air supplied in the central region of the exhaust casing (38) contributes to pressurising seals of a lubrication housing in which is housed a bearing borne by this exhaust casing (38).

3. The turbojet according to claim 1 or 2, in which the air supplied in the central region of the exhaust casing (38) supplies a purge (49) situated upstream of the exhaust casing (38).

4. The turbojet according to any of claim 1 to 3, in which the radial arms (39) of the exhaust casing (38) comprise pierced jackets arranged so that the air traversing these radial arms (39) cools walls of these arms.

5. The turbojet according to any of claim 1 to 4, in which the inlet opening (21) of the intermediate flow path is a circumferential opening surrounding the primary flow path.

6. The turbojet according to any of claim 1 to 5, in which the shroud (11) joins the outer shell of the exhaust casing downstream of the radial arms (39) of this exhaust casing (38).
